(19) Europäisches Patentamt

European Patent Office

Office européen des brevets

(11) Veröffentlichungsnummer : **0 098 888**
**B1**

(12) **EUROPÄISCHE PATENTSCHRIFT**

(45) Veröffentlichungstag der Patentschrift :
21.11.85

(21) Anmeldenummer : 82105945.8

(22) Anmeldetag : 03.07.82

(51) Int. Cl.⁴ : **H 04 N   9/67**

(54) **Integrierte Digitalschaltung für die Farbmatrix von Farbfernsehgeräten.**

(43) Veröffentlichungstag der Anmeldung :
25.01.84 Patentblatt 84/04

(45) Bekanntmachung des Hinweises auf die Patenter-
teilung : 21.11.85 Patentblatt 85/47

(84) Benannte Vertragsstaaten :
DE FR GB IT NL

(56) Entgegenhaltungen :
DE-A- 2 601 072
FUNKSCHAU, Heft 15, 1980, München "Digitalisie-
rung im Fernsehempfänger" Seiten 41-44

(73) Patentinhaber : Deutsche ITT Industries GmbH
Hans-Bunte-Strasse 19 Postfach 840
D-7800 Freiburg (DE)
DE
ITT INDUSTRIES INC.
320 Park Avenue
New York, NY 10022 (US)
FR GB IT NL

(72) Erfinder : Ullrich, Manfred Fritz, Ing. grad.
Fischnau 10
D-7809 Denzlingen (DE)

(74) Vertreter : Morstadt, Volker, Dipl.-Ing.
c/o Deutsche ITT Industries GmbH Patent/Lizenzab-
teilung Postfach 840 Hans-Bunte-Strasse 19
D-7800 Freiburg/Brsg. (DE)

# 0 098 888

**Beschreibung**

Die Erfindung betrifft eine integrierte Digitalschaltung für die Farbmatrix von Farbfernsehgeräten mit digitaler Signalaufbereitung, wobei den drei Paralleleingängen der Farbmatrix das digitale Luminanzsignal und die beiden digitalen Farb-Differenzsignale zugeführt und an den drei Parallelausgängen der Farbmatrix die digitalen Farbsignale abzunehmen sind.

Bei den heute üblichen Farbfernsehsystemen (NTSC, PAL, SECAM) setzt sich das Luminanzsignal Y bekanntlich aus den drei Farbsignalen R = Rot, G = Grün und B = Blau nach der Gleichung zusammen :

$$Y = 0{,}3\ R\ +\ 0{,}59\ G\ +\ 0{,}11\ B.$$

Vom Farbfernsehsender werden die beiden Farb-Differenzsignale R − Y, B − Y übertragen, und zwar je nach Farbfernsehsystem in unterschiedlicher Weise durch entsprechende Modulation in Verbindung mit den weiteren gesendeten Signalen. Nach entsprechender Demodulation und Separierung wird im Farbfernsehempfänger das jeweilige Farbsignal entsprechend den folgenden Gleichungen durch die Farbmatrix wiedergewonnen :

$$R = (R − Y) + Y$$
$$G = − 0{,}51\ (R − Y) − 0{,}19\ (B − Y) + Y$$
$$B = (B − Y) + Y$$

Für die bisher in Farbfernsehgeräten übliche Farbmatrix werden im allgemeinen aus entsprechenden Widerstandsnetzwerken bestehende Schaltungen verwendet, die die in analoger Form vorliegenden Farb-Differenzsignale in entsprechende analoge Farbsignale umwandeln (siehe z. B. DE-A1-2 854 236).

Bei Farbfernsehgeräten mit digitaler Signalaufbereitung, wie sie beispielsweise aus der DE-A1-28 54 236 bekannt sind, liegen die Farb-Differenzsignale und das Luminanzsignal in digitaler Form vor, und eine digitale Farbmatrix muß auch hier die angegebenen drei Gleichungen für die digitalen Farbsignale erfüllen. Mittels Paralleladdierern und Parallelmultiplizierern läßt sich aus diesen Gleichungen die idealisierte digitale Farbmatrix ohne weiteres angeben.

Eine derartige Farbmatrix wäre jedoch nur sehr eingeschränkt verwendbar, da sie zum einen den dezimalen Reduktionsfaktor 0,88 für das Rot-Differenzsignal und den dezimalen Reduktionsfaktor 0,49 für das Blau-Differenzsignal nicht berücksichtigte und außerdem dem Hersteller keine Wahlmöglichkeit für die von ihm vorzusehende Farbübersättigung ließe.

Der in den Ansprüchen gekennzeichneten Erfindung liegt daher die Aufgabe zugrunde, eine digitale Farbmatrix anzugeben, die sowohl die genannten Reduktionsfaktoren berücksichtigt als auch eine Farbübersättigung bis zum Faktor 2 zuläßt. Ferner soll die Farbmatrix so ausgelegt sein, daß die Ausgangssignale der Farbmatrix, also die drei digitalen Farbsignale, dann den Wert 0 haben sollen, wenn auch die beiden digitalen Farb-Differenzsignal und das digitale Luminanzsignal am Eingang der Farbmatrix den Wert 0 haben. Schließlich soll noch die Forderung erfüllt sein, daß bei vorgegebener Stellenzahl der digitalen Farbsignale und vorgegebener Stellenzahl der beiden digitalen Farb-Differenzsignale und des digitalen Luminanzsignals die vom Hersteller beabsichtigte maximale Farbübersättigung möglich sein soll.

Die in den Ansprüchen gekennzeichnete Lösung für die verschiedenen Teilaspekte des Problems bringt den Vorteil, daß die für die eingangs genannten Faktoren − 0,51 und − 0,19 an sich erforderlichen Multiplizierer entfallen können und daß lediglich die zur Berücksichtigung der Übersättigung erforderlichen drei Multiplizierer benötigt werden und ferner natürlich die auch bei der idealen Farbmatrix erforderlichen vier Addierer.

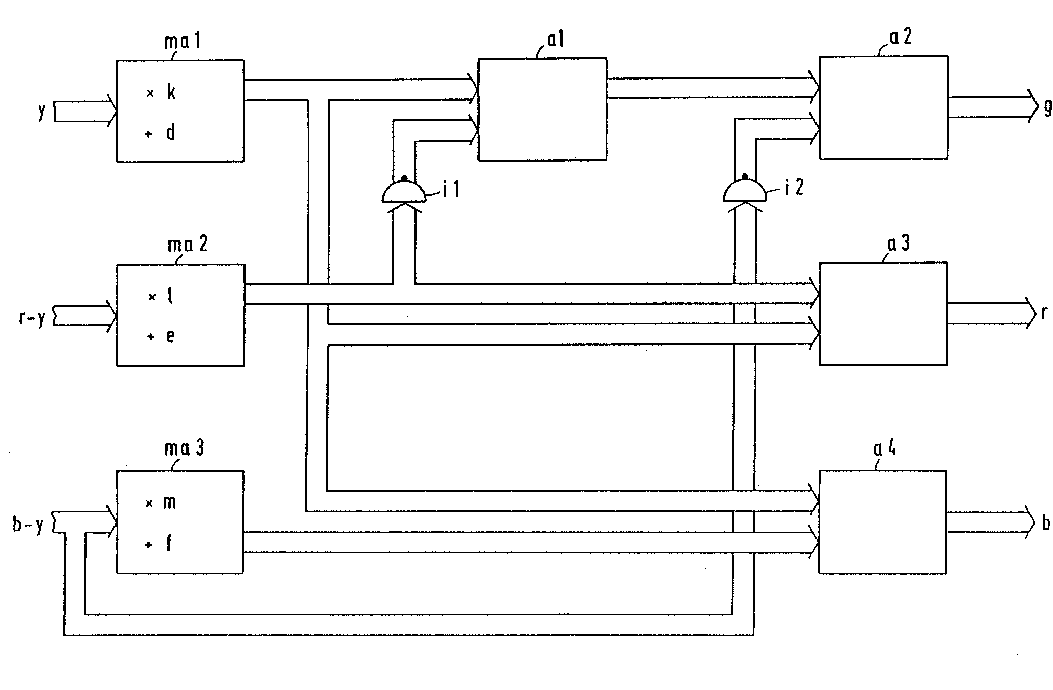

Die Erfindung wird nun anhand der einzigen Figur der Zeichnung näher erläutert, die ein stark schematisiertes Prinzipschaltbild einer Ausführungsform der Erfindung zeigt.

Das digitale Luminanzsignal y und die beiden Farb-Differenzsignale r − y, b − y werden von einer entsprechenden Stufe des Farbfernsehempfängers mit digitaler Signalaufbereitung erzeugt. Solche Stufen sind in der eingangs genannten DE-A1-28 54 236 beschrieben und werden demzufolge im Rahmen der vorliegenden Erfindung als bekannt vorausgesetzt. Im Ausführungsbeispiel der Figur ist das digitale Luminanzsignal y dem Paralleleingang des ersten Multiplizierer/Addierers ma1 zugeführt, der zum aus dem Luminanzsignal y und dem ersten Faktor k gebildeten Produkt den ersten Summanden d addiert. In vergleichbarer Weise ist das Rot-Differenzsignal r − y dem Paralleleingang des zweiten Multiplizierer/Addierers ma2 zugeführt, der zu dem aus diesem und dem zweiten Faktor 1 gebildeten Produkt den zweiten Summanden e addiert. Schließlich ist das Blau-Differenzsignal b − y dem Paralleleingang des dritten Multiplizierer/Addierers ma3 zugeführt, der zu dem aus diesem und dem dritten Faktor m gebildeten Produkt den dritten Summanden f addiert. Dabei sind die drei Faktoren k, l, m und die drei Summanden d, e, f durch folgende Beziehungen in Dezimaldarstellung bestimmt ; es ist also selbstverständlich, daß die Zahlenwerte in Dezimaldarstellung von den drei Mulitplizierer/Addierern ma1, ma2, ma3 in demjenigen Zahlensystem verarbeitet werden, das in der konkreten Schaltung verwendet wird ; im

2

einfachsten Fall handelt es sich dabei um das Dualsystem. Es gelten also die folgenden sechs Gleichungen :

$$k = 1/(0,89\ s + 0,11) \tag{1}$$
$$l = 1,4\ sk \tag{2}$$
$$m = 2,514\ sk \tag{3}$$
$$d = 1-5/6 \tag{4}$$
$$e = 5/6-0,7\ sk \tag{5}$$
$$f = 11/6-1,257\ sk \tag{6}$$

Mit s ist dabei die herstellerseits für das Farbfernsehgerät vorgesehene maximale Farbübersättigung bezeichnet.

Der Parallelausgang des ersten Multiplizierer/Addierers ma1 liegt am ersten Paralleleingang des ersten Paralleladdiers a1, während dessen zweitem Paralleleingang das Ausgangssignal des zweiten Multiplizierers/Addierers ma2 Stelle für Stelle invertiert und jeweils um eine Stelle rechtsverschoben zugeführt ist. Die stellenweise Invertierung geschieht dabei zweckmäßigerweise mittels jeweils eines Inverters pro Stelle, was in der Figur durch den ersten Mehrfachinverter i1 veranschaulicht ist.

Der Parallelausgang des ersten Paralleladdierers a1 liegt am ersten Paralleleingang des zweiten Paralleladdierers a2, dessen zweitem Paralleleingang das Blau-Differenzsignal b − y Stelle für Stelle invertiert und jeweils um eine Stelle rechtsverschoben zugeführt ist. Diese Invertierung geschieht zweckmäßigerweise mittels des in der Figur gezeigten Mehrfachinverters i2.

Der Parallelausgang des ersten Multiplizierers/Addierers ma1 liegt ferner am ersten Paralleleingang des dritten Paralleladdierers a3, dessen zweiter Paralleleingang mit dem Parallelausgang des zweiten Multiplizierer/Addierers ma2 verbunden ist. Schließlich liegt auch der erste Paralleleingang des vierten Paralleladdierers a4 am Parallelausgang des ersten Multiplizierer/Addierers ma1, während dessen zweiter Paralleleingang mit dem Parallelausgang des dritten Multiplizierer/Addierers ma3 verbunden ist.

Am Parallelausgang des zweiten Addierers entsteht das Grün-Signal g, an dem des dritten Paralleladdierers a3 das Rot-Signal r und an dem des vierten Paralleladdierers a4 das Blau-Signal, wobei diese drei Signale, wie bereits erwähnt, die digitalen Farbsignale sind.

Wie oben bereits ferner erwähnt wurde, enthält die digitale Farbmatrix nach der Erfindung nicht, wie eigentlich zu erwarten wäre, Multiplizierer für die dezimalen Faktoren − 0,51 bzw. − 0,19, mit denen die Farbdifferenzsignale r − y bzw. b − y eigentlich zu multiplizieren wären. Diese vorteilhafte Eigenschaft ergibt sich bei den nun im einzelnen näher erläuterten Schritten, die zur Problemlösung entsprechend der Erfindung geführt haben.

Wie Überlegungen des Erfinders zeigen, ist es zweckmäßig, wenn der maximale Zahlenwert des Blau-Signals dem maximalen Ausgangs-Aussteuerbereich der digitalen Farbmatrix zugeordnet wird. Wenn also beispielsweise die digitalen Farbsignale jeweils achtstellig sind und die einzelnen Stufen im natürlichen Dualsystem arbeiten, soll der achtstelligen Dualzahl 11111111 am Ausgang des vierten Paralleladdierers a4 der volle Ausgangs-Aussteuerbereich zugeordnet sein, was bedeutet, daß bei diesem Zahlenwert auch die vorgesehene maximale Übersättigung auftritt. Für den Übersättigungswert $s = 1$, also 100 % Sättigung, muß der Maximalwert des Blau-Signals entsprechend reduziert werden, wofür der erste Faktor k ein entsprechendes Maß ist. Aus

$$b - y = 0,3\ r + 0,58\ g + 0,11\ b$$

folgt für $r = g = 0$, daß der Maximalwert $(b - y)_m = 0,89$ ist. Andererseits ergibt sich aus der Bedingung $r = g = 0$, daß der Maximalwert $y_{bm}$, der in diesem Falle ein reiner Blauwert ist, 0,11 beträgt. Somit läßt sich für den ersten Faktor k die folgende Definitionsgleichung anschreiben :

$$(y_{bm} + (b - y)_m\ s)\ k = 1,$$

woraus sich durch Umstellung ergibt :

$$k = 1/(0,89\ s + 0,11) \tag{1}$$

Die Farbdifferenzsignale werden bekanntlich mit unterschiedlichen Reduktionsfaktoren gesendet, und zwar das Rot-Differenzsignal mit dem Reduktionsfaktor 0,88 und das Blau-Differenzsignal mit dem Reduktionsfaktor 0,49 versehen. Zusätzlich zu diesen Faktoren ist ferner die vom Hersteller gewünschte Farbübersättigung auch auf der Eingangsseite der Farbmatrix zu berücksichtigen. Wegen der geringeren Reduzierung des Rot-Differenzsignal r − y (Faktor 0,88) ist für die Zuordnung dieses Signal ausschlaggebend. Der mögliche Wertebereich, sozusagen also der Spitze-Spitze-Wert des Rot-Differenzsignals ergibt sich aus der Betrachtung der beiden Fälle, daß einerseits reines Rot und andererseits Rot = 0 vorliegt. Für reines Rot gilt $g = b = 0$ und somit $(r − y)_m = + 0,7\ r$. Der Minimalwert $(r − y)_0$ ergibt sich aus der Bedingung $g = b = 1$, $r = 0$ zu − 0,7. Das Rot-Differenzsignal liegt also im Bereich ± 0,7, hat also die Breite 1,4, die mit dem Reduktionsfaktor 0,88 multipliziert am Eingang der Farbmatrix anliegt.

Der digitale Maximalwert des Eingangssignals der Farbmatrix muß also 1,4 · 0,88 s entsprechen.

Eine gleichartige Überlegung für das Blau-Differenzsignal zeigt, daß dessen maximaler Bereich ± 0,89 · 0,49 beträgt. Somit ist der zu verarbeitende Maximalbereich beim Rot-Differenzsignal größer als beim Blau-Differenzsignal, und die Schaltung der Farbmatrix ist bezüglich des Eingangssignalbereichs aufgrund der Bedingung ± 0,7 · 0,88 auszulegen.

Wie eben gezeigt wurde, ergibt sich für den Maximalwert des Rot-Differenzsignals ein positiver und für den Minimalwert ein negativer Zahlenwert. Dies ist bei der Matrix dadurch zu berücksichtigen, daß die Bereichsmitte bei beiden Farbdifferenzsignalen durch den zusätzlichen dezimalen Zahlenwert + 0,5 auf der Eingangsseite zu berücksichtigen ist.

Aufgrund der obigen Überlegung der Erfinders ergeben sich somit die Definitionen für den zweiten Faktor 1 und den dritten Faktor m :

$$l = \frac{1,4 \text{ s}}{0,89 \text{ s} + 0,11} = 1,4 \text{ sk} \tag{2}$$

$$m = \frac{1,4 \cdot 0,88 \text{ ks}}{0,49} = 2,514 \text{ sk} \tag{3}$$

Die folgende Tabelle gibt die Zahlenwerte für k, l, m und s = 1, 1,5, 2 an :

Tabelle 1

| s | 1,0 | 1,5 | 2,0 |
|---|-----|-----|-----|
| k | 1 | 0,692 | 0,529 1 |
| l | 1,4 | 1,453 | 1,481 |
| m | 2,513 | 2,61 | 2,661 |

Es zeigt sich, daß die Werte von l, m zwischen s = 1 und s = 2 sich nur wenig ändern, so daß es zweckmäßig ist, die gesamte Farbmatrix für den mittleren Wert s = 1,5 zahlenmäßig fest zu dimensionieren.

Es ergibt sich ferner, daß der Faktor m, mit dem das Blau-Differenzsignal multipliziert wird zusammen mit dem Faktor − 0,19 der idealen Matrix gerade ungefähr den gemeinsamen Faktor − 0,5 ergibt, was insbesondere für s = 1,5 sehr gut erfüllt ist (der genaue Wert entspricht s = 1,687). Aufgrund dieser Feststellung ergibt sich ein wesentlicher Vorteil der Erfindung, daß nämlich ein Multiplizierer für den Faktor − 0,19 entfallen kann.

Die Überlegungen zur Bestimmung der drei Summanden d, e, f gehen davon aus, daß es zweckmäßig und sinnvoll ist, für den Fall verschwindender Eingangssignale y, r − y, b − y der Farbmatrix auch deren Ausgangssignale zu 0 zu machen. Unter Berücksichtigung des für die beiden Farbdifferenzsignale r − y, b − y erforderlichen additiven Wertes + 0,5 (siehe oben) ergibt sich somit das folgende Gleichungssystem zur Bestimmung der drei Summanden d, e, f :

$$d + (0,5 \text{ l} + e) \cdot (- 0,5) + 1 + 0,5 (- 0,5) + 0,5 = g = 0$$
$$d + 0,5 \cdot \text{l} + e \qquad\qquad\qquad = r = 0$$
$$d + 0,5 \text{ m} + f \qquad\qquad\qquad = b = 0$$

Die Auflösung dieses Gleichungssystems nach d, e, f ergibt zunächst d = − 5/6, e = 5/6 − 0,7 sk und f = 11/6 − 1,257 sk. Die Berechnung der Zahlenwerte im Bereich s = 1 bis s − 2 ergibt, daß auch e wie d negativ wird, was somit eigentlich zwei Parallelsubtrahierer erforderlich machte. Dies kann jedoch in einfacher Weise und aufgrund der Überlegung umgangen werden, daß diese negativen Zahlen durch Addition von 1 zu positiven Zahlen werden. Dies führt lediglich dazu, daß die Farbsignale g, r um dezimal eine 1 und das Farbsignal b um dezimal eine 2 größer sind. Da jedoch die Stellenzahl der Ausgangssignale der Farbmatrix ohne diese zusätzlichen additiven Größen bemessen ist, führen die jeweiligen additiven Größen lediglich dazu, daß das Ausgangssignal der Farbmatrix eine bzw. zwei zusätzliche Stellen haben müßte, die jedoch nicht vorgesehen sind, so daß sich die additiven Größen im Ausgangssignal nicht auswirken.

Nach einem weiteren Merkmal der Erfindung ist auch der für den Faktor − 0,51 der idealen Matrix erforderliche Multiplizierer nun nicht vorhanden, da der Faktor 0,51 durch den Faktor 0,5 = $2^{-1}$ ersetzt wird. Die Multiplikation mit Zweierpotenzen ist im Dualsystem jedoch einfach durch entsprechende Links- oder Rechtsverschiebung der Stellen des Signals bezüglich der Stellen, an die es angelegt werden

4

soll, zu erreichen. Der Minusoperator wird durch Invertierung der einzelnen Stellen realisiert, so daß sich schließlich die in der Figur gezeigte Anordnung ergibt.

Die durch die oben erwähnte additive 1 entstehenden Stellen können, wenn die drei Addierer a2, a3, a4 hinsichtlich ihrer Stellenzahl entsprechend ausgelegt werden, zweckmäßigerweise dazu benutzt werden, die Farbmatrix auf richtige Funktion zu überwachen. Liegen nämlich die Eingangssignale der Farbmatrix nicht in den vorgegebenen bzw. erlaubten Bereichen, so können in diesen zusätzlichen Stellen, die oberhalb der eigentlichen höchstwertigen Stelle der Ausgangssignale liegen, Signale auftreten, die ein Über- oder Unterschreiten des zulässigen Bereiches anzeigen. Diese Signale können dazu benutzt werden, um digitale Begrenzer zu aktivieren, die beim Überschreiten das jeweilige Ausgangssignal der Farbmatrix auf den Maximalwert und bei Unterschreiten auf den Minimalwert klemmen. Die folgende Tabelle zeigt die Zuordnung der Signale an diesen zusätzlichen Stellen für die jeweiligen Betriebszustände

### Tabelle 2
### zwei Stellen oberhalb der höchstwertigen Stelle

| | im zulässigen Bereich | Überschreitung | Unterschreitung |
|---|---|---|---|
| r:a3 | 01 | 10 | 00 |
| g:a2 | 01 | 10 | 00 |
| b:a4 | 10 | 11 | 01 |

Zur schaltungstechnischen Realisierung der drei Multiplizierer/Addierer ma1, ma2, ma3 können beispielsweise auch bevorzugt Festwertspeicher (ROMs) oder umprogrammierbare Festwertspeicher (z. B. EAROMs) dienen.

Insgesamt bietet sich für die integrierte Realisierung der digitalen Farbmatrix nach der Erfindung die Technik der integrierten Isolierschicht-Feldeffekttransistortechnik-Schaltungen an, da derartige Schaltungen zur Realisierung von Digitalschaltungen bestens geeignet sind.

**Patentansprüche**

1. Integrierte Digitalschaltung für die Farbmatrix von Farbfernsehgeräten mit digitaler Signalaufbereitung, wobei den drei Paralleleingängen der Farbmatrix das digitale Luminanzsignal (y) und die beiden digitalen Farb-Differenzsignale (r − y, b − y) zugeführt und an den drei Parallelausgängen der Farbmatrix die digitalen Farbsignale (g, r, b) abzunehmen sind, gekennzeichnet durch :
— einen ersten Multiplizierer/Addierer (ma1) für das digitale Luminanzsignal (y), der zu dem aus diesem und einem ersten Faktor (k) gebildeten Produkt einen ersten Summanden (d) addiert,
— einen zweiten Multiplizierer/Addierer (ma2) für das Rot-Differenzsignal (r − y), der zu dem aus diesem und einem zweiten Faktor (1) gebildeten Produkt einen zweiten Summanden (e) addiert,
— einen dritten Multiplizierer/Addierer (ma3) für das Blau-Differenzsignal (b − y), der zu dem aus diesem und einem dritten Faktor (m) gebildeten Produkt einen dritten Summanden (f) addiert, wobei die drei Faktoren (k, l, m) und die drei Summanden (d, e, f) durch folgende Beziehungen in Dezimaldarstellung bestimmt sind :

$$k = 1/(0,89 \ s + 0,11) \tag{1}$$
$$l = 1,4 \ sk \tag{2}$$
$$m = 2,514 \ sk \tag{3}$$
$$d = 1 - 5/6 \tag{4}$$
$$e = 5/6 - 0,7 \ sk \tag{5}$$
$$f = 11/6 - 1,257 \ sk \tag{6}$$

und wobei mit s die herstellerseits für das Fernsehgerät vorgesehene maximale Farbübersättigung bezeichnet ist,
— einen ersten Paralleladdierer (a1), dessen erster Paralleleingang mit dem Parallelausgang des ersten Multiplizierer/Addiers (ma1) verbunden ist und dessen zweitem Paralleleingang das Ausgangssignal des zweiten Multiplizierer/Addierers (ma2) Dualstelle für Dualstelle invertiert und jeweils um eine Dualstelle rechtsverschoben zugeführt ist,
— einen zweiten Paralleladdierer (a2), dessen erster Paralleleingang mit dem Parallelausgang des ersten Paralleladdierers (a1) verbunden und dessen zweitem Paralleleingang das Blau-Differenzsignal (b

5

— y) Dualstelle für Dualstelle invertiert und jeweils um eine Dualstelle rechtsverschoben zugeführt ist,

— einen dritten Paralleladdierer (a3), dessen erster bzw. dessen zweiter Eingang mit dem Ausgang des ersten bzw. des zweiten Multiplizierer/Addierers (ma1, ma2) verbunden ist,

— einen vierten Paralleladdierer (a4), dessen erster bzw. dessen zweiter Paralleleingang am Ausgang des ersten bzw. des dritten Multiplizierer/Addierers (ma1, ma3) angeschlossen ist, und

— der Parallelausgang des zweiten bzw. des dritten bzw. des vierten Paralleladdierers (a2, a3, a4) ist der Ausgang für das digitale Grün- bzw. Rot- bzw. Blau-Signal (g, r, b).

2. Integrierte Digitalschaltung nach Anspruch 1, dadurch gekennzeichnet, daß die Multiplizierer/Addierer (ma1, ma2, ma3) als Festwertspeicher oder umprogrammierbare Festwertspeicher realisiert sind.

**Claims**

1. Digital integrated circuit for the color matrix of a color-television set with digital signal processing circuitry wherein the digital luminance signal (y) and the two digital color-difference signals $(r - y, b - y)$ are applied to the three parallel inputs of the color matrix, whose three parallel outputs provide the digital color signals (g, r, b), characterized by :

— a first multiplier/adder (ma1) for the digital luminance signal (y), which adds a first addend (d) to the product of the digital luminance signal (y) and a first factor (k),

— a second multiplier/adder (ma2) for the red-minusluminance signal $(r - y)$, which adds a second addend (e) to the product of the red-minus-luminance signal $(r - y)$ and a second factor (l),

— a third multiplier/adder (ma3) for the blue-minusluminance signal $(b - y)$, which adds a third addend (f) to the product of the blue-minus-luminance signal $(b - y)$ and a third factor (m), the three factors (k, l, m) and the three addends (d, e, f) being determined by the following relationships in decimal notation :

$$
\begin{aligned}
k &= 1/(0.89\ s + 0.11) & (1)\\
l &= 1.4\ sk & (2)\\
m &= 2.514\ sk & (3)\\
d &= 1 - 5/6 & (4)\\
e &= 5/6 - 0.7\ sk & (5)\\
f &= 11/6 - 1.257\ sk & (6)
\end{aligned}
$$

where s is the maximum color overload set at the factory.

— a first parallel adder (a1) whose first parallel input is connected to the parallel output of the first multiplier/adder (ma1), and to whose second parallel input the output signal of the second multiplier/adder (ma$^2$) is applied after being inverted digit by digit and shifted one position to the right,

— a second parallel adder (a2) whose first parallel input is connected to the parallel output of the first parallel adder (a1), and to whose second parallel input the blue-minus-luminance signal $(b - y)$ is applied after being inverted digit by digit and shifted one position to the right,

— a third parallel adder (a3) having its first and second inputs connected to the output of the first multiplier/adder (ma1) and to the output of the second multiplier/adder (ma2), respectively,

— a fourth parallel adder (a4) having its first and second parallel inputs connected to the first multiplier/adder (ma1) and to the output of the third multiplier/adder (ma3), and

— the fact that the parallel outputs of the second, third, and fourth parallel adders (a2, a3, a4) are the outputs for the digital green, red, and blue signals (g, r, b), respectively.

2. A digital integrated circuit as claimed in claim 1, characterized in that the multipliers/adders (ma1, ma2, ma3) are implemented with read-only memories or reprogrammable read-only memories.

**Revendications**

1. Circuit numérique intégré destiné à la matrice de conversion des signaux de couleurs de téléviseurs couleurs appliquant le traitement numérique des signaux, dans lequel le signal numérique de luminance (y) et les deux signaux numériques de différences de couleurs $(r - y, b - y)$ sont envoyés aux trois entrées parallèles de la matrice et les signaux numériques de chrominance (v, r, b) peuvent être prélevés sur les trois sorties parallèles de ladite matrice, caractérisé en ce qu'il comprend :

— un premier multiplicateur/additionneur (ma1) pour le signal numérique de luminance (y) chargé d'additionner un premier terme (d) au produit formé de ce signal et d'un premier facteur (k),

— un second multiplicateur/additionneur (ma2) pour le signal de différence du rouge $(r - y)$ chargé d'additionner un second terme (e) au produit formé de ce signal et d'un second facteur (1),

— un troisième multiplicateur/additionneur (ma3) pour le signal de différence du bleu $(b - y)$ chargé d'additionner un troisième terme (f) au produit formé de ce signal et d'un troisième facteur (m), les trois

**0 098 888**

facteurs (k, l, m) et les trois termes (d, e, f) étant déterminés en représentation décimale par les relations suivantes :

$$k = 1/(0,89\ s + 0,11) \qquad (1)$$
$$l = 1,4\ sk \qquad (2)$$
$$m = 2,512\ sk \qquad (3)$$
$$d = 1 - 5/6 \qquad (4)$$
$$e = 5/6 - 0,7\ sk \qquad (5)$$
$$f = 11/6 - 1,257\ sk \qquad (6)$$

s désignant la sursaturation maximale de couleurs prévue par le fabricant pour le téléviseur,

— un premier additionneur parallèle (a1) dont la première entrée parallèle est reliée à la sortie parallèle du premier multiplicateur/additionneur (ma1) et dont la seconde entrée parallèle reçoit le signal de sortie du second multiplicateur/additionneur (ma2) inversé chiffre binaire pour chiffre binaire et décalé d'un chiffre binaire vers la droite,

— un second additionneur parallèle (a2) dont la première entrée parallèle est reliée à la sortie parallèle du premier additionneur parallèle (a1) et dont la seconde entrée parallèle reçoit le signal de différence du bleu (b − y) inversé chiffre binaire pour chiffre binaire et décalé d'un chiffre binaire vers la droite,

— un troisième additionneur parallèle (a3) dont la première et la seconde entrée sont reliées aux sorties du premier et du second multiplicateur/additionneur (ma1, ma2),

— un quatrième additionneur parallèle (a4) dont la première et la seconde entrée parallèle sont reliées aux sorties du premier et du troisième multiplicateur/additionneur (ma1, ma3), et

— les sorties parallèles du second, du troisième et du quatrième additionneur parallèle (a2, a3, a4) sont les sorties du signal numérique vert, rouge et bleu (v, r, b).

2. Circuit numérique intégré conforme à la revendication 1, caractérisé en ce que les multiplicateurs/additionneurs (ma1, ma2, ma3) sont réalisés sous la forme de mémoires mortes ou de mémoires mortes reprogrammables.

7